# FASCICULE DE BREVET EUROPEEN

(11) **EP 1 816 937 B1**
(45) Date de publication et mention de la délivrance du brevet: **03.11.2010**
(21) Numéro de dépôt: 05823044.2
(22) Date de dépôt: 28.11.2005
(51) Int. Cl.: A47J 31/54

(54) **DISTRIBUTEUR DE BOISSONS INFUSEES COMPRENANT UNE CHAUDIERE AMELIOREE**
BRAUGETRÄNKESPENDER MIT VERBESSERTEM BOILER
BREWING BEVERAGE DISPENSER COMPRISING AN IMPROVED BOILER

(30) Priorité: 29.11.2004 FR 0412634
(43) Date de publication de la demande: 15.08.2007
(73) Titulaire: SEB S.A., 69130 Ecully (FR)
(72) Inventeur: MORIN, Gilles, Résidence le Perlymèle, F-14210 Saint Honorine du Fay (FR)
(74) Mandataire: Kiehl, Hubert
(86) Numéro de dépôt international: PCT/FR2005/002952
(87) Numéro de publication internationale: WO 2006/056705

(56) Documents cités:
- EP-A- 0 342 516
- EP-A- 0 353 425
- WO-A-01/43610
- DE-B- 1 265 892

## Description

La présente invention est relative à un appareil du type distributeur de boissons infusées à partir de produit alimentaire pulvérulent d'infusion ou de percolation, tels le café moulu, le thé, le chocolat, etc.

Un appareil de préparation et distribution de boissons chaudes comprend généralement un réservoir d'eau froide, une pompe électrique, un ensemble formant chaudière et une tête d'infusion apte à recevoir le produit pulvérulent en vue de lui injecter l'eau chaude en provenance de ladite chaudière, la boisson obtenue étant ensuite orientée vers un récipient collecteur. En fin de cycle d'infusion, la tête d'infusion doit être ouverte afin de pouvoir y introduire à nouveau le produit d'infusion après avoir évacué le reste de produit infusé. Ces appareils sont parfois amenés à fournir de la vapeur nécessaire pour confectionner un cappuccino ou un thé. Pour ce faire, ils doivent disposer d'une régulation en température de l'élément chauffant propre à produire de la vapeur et d'une vanne de distribution placée à la sortie de la chaudière. Une telle solution pose des problèmes d'entartrage de la vanne et donc de durée de vie limitée de la machine.

Pour remédier à cet inconvénient, une solution a été proposée dans le document EP 0 342 516 où la chaudière présente deux conduits séparés pour la production d'eau chaude et de vapeur en étant chauffés par un élément chauffant commun selon des consignes de température spécifiques. Les deux conduits d'eau chaude et de vapeur se trouvent usinés au niveau du plan de séparation des disques supérieur et inférieur formant la chaudière, l'un étant disposé à la périphérie et l'autre dans la zone centrale de ce plan, l'élément chauffant, lui, étant placé sur la face externe du disque inférieur. La mise en contact des deux disques de la chaudière fait office de fermeture des conduits. Cette solution permet, certes, de placer la vanne de distribution à l'entrée de la chaudière évitant ainsi son entartrage, mais trouve ses limites lorsque le conduit de vapeur et le conduit d'eau chaude se trouvent pratiquement à une même distance de l'élément chauffant. Ceci présente l'inconvénient de devoir chauffer beaucoup la chaudière pour produire de la vapeur et de devoir ensuite attendre un certain temps avant de pouvoir confectionner un café, la chaudière ayant trop monté en température. Par ailleurs, s'agissant d'une chaudière à conduits chauffants plans, elle se présente sous forme d'un disque de diamètre très important par rapport à sa largeur et donc d'encombrement horizontal important, peu compatible avec un distributeur de boissons nécessitant généralement un design plutôt longiligne et vertical.

Une autre solution a été décrite dans le document FR 2 802 073 où la chaudière est cylindrique verticale et renferme un canal de circulation de l'eau sous forme d'un conduit tubulaire hélicoïdal dont le trajet suit celui d'une résistance chauffante intégrée, avec le conduit d'eau, dans le corps de la chaudière. Ce document décrit, certes, une chaudière verticale et longiligne pour produire de l'eau chaude, mais qui ne comporte pas de conduit de vapeur et de ce fait, il reprend les inconvénients de l'état de la technique exposé plus haut.

Le document EP 0 353 425 décrit un chauffe eau instantané pour une machine à café comportant un conduit d'eau incliné pour permettre la descente par gravité de l'eau d'infusion vers la chambre d'infusion. Ce conduit d'eau est en forme de spirale et est agencé autour d'un élément chauffant et d'un conduit de vapeur concentriques adjacents, ceux-ci étant également en forme de spirale. On remarque toutefois que ces conduits sont formés chacun d'une seule boucle ouverte et qu'ils sont intégrés dans un chauffe eau en forme de disque plat, les conduits étant très faiblement inclinés, s'étendant principalement dans un plan. Un tel chauffe eau n'est pas adapté à l'utilisation dans une machine à café à pompe qui doit généralement fournir un débit important d'eau chaude d'infusion.

Le document DE 1 265 892 décrit un chauffe eau électrique destiné à produire uniquement de l'eau chaude comportant un corps tubulaire cylindrique dont les parois renferment des éléments chauffants périphériques en spirale et un conduit d'eau hélicoïdal disposé vers l'intérieur. Ce chauffe eau n'est nullement prévu pour être utilisé avec un distributeur de boissons infusées et ne comporte aucun conduit ou moyen de production de vapeur.

Par ailleurs, le document WO 99/12456 décrit également une chaudière cylindrique d'axe longitudinal vertical réalisée en un matériau conducteur de la chaleur dont le corps est traversé par des canaux de passage et chauffage de l'eau en provenance d'un réservoir d'eau froide et débouchant dans une chambre d'infusion supportée en partie supérieure de la chaudière. Les canaux sont parallèles à l'axe longitudinal de la chaudière et sont situés de part et d'autre d'un alésage central. Ces canaux d'eau sont volontairement réalisés sans coude pour des considérations de détartrage facile, le corps de la chaudière étant en aluminium extrudé et les canaux d'eau chemisés d'inox. La résistance chauffante est en forme de U, elle est accolée sur un côté du bloc chauffant et s'étend parallèlement à l'axe longitudinal de la chaudière. Par ailleurs, cet appareil réalise également une fonction vapeur, notamment en accolant une chaudière secondaire au corps de la première en ménageant une chambre aplatie. Pour ceci, la chaudière secondaire présente un boîtier profilé adapté à épouser la paroi latérale de la première chaudière du côté de la résistance chauffante. Une telle construction assure, certes, les deux fonctions : eau chaude et vapeur avec une même résistance chauffante, tout en assurant un bon maintien en température de la chambre d'infusion. Toutefois, les performances d'échange thermique entre l'élément chauffant et les conduits d'eau sont assez faibles dans la première chaudière. Par ailleurs, dans la deuxième chaudière de production de vapeur, la vapeur venant en contact direct avec les parties en aluminium de la chaudière, il pourrait y avoir des problèmes de toxicité.

Le but de la présente invention est de remédier aux inconvénients précités et de fournir un distributeur de boissons infusées comportant une chaudière apte à réaliser un transfert thermique amélioré d'un élément chauffant vers les conduits d'eau chaude et de vapeur, tout en étant apte à éviter d'éventuels problèmes de toxicité ou d'entartrage au contact de l'eau ou de la vapeur avec certains matériaux de la chaudière.

Un autre but de l'invention est un distributeur de boissons infusées comportant une chaudière améliorée apte à réaliser, avec un seul élément chauffant, une infusion avec de l'eau passant dans le conduit d'eau chaude immédiatement après le passage de la vapeur dans le conduit de vapeur.

Un autre but de l'invention est un distributeur de boissons infusées comportant une chaudière améliorée, de construction simplifiée et pouvant être industrialisée de manière économique pour une production en grande série, tout en étant fiable en fonctionnement.

Ces buts sont atteints avec un distributeur de boissons infusées comportant un boîtier renfermant des moyens de pompage d'eau à partir d'un réservoir pour l'envoyer à travers une chaudière dans une chambre d'infusion contenant un produit à infuser, puis l'évacuer sous forme d'infusion à l'extérieur de la chambre, ladite chaudière comportant un corps cylindrique intégrant un élément chauffant électrique et un conduit d'eau, l'élément chauffant et ledit conduit d'eau formant deux hélices de diamètres différents enroulées autour de l'axe longitudinal du corps de la chaudière, sensiblement sur toute sa hauteur, du fait que ledit corps de chaudière intègre un conduit de vapeur formant une hélice ayant au moins deux boucles, agencée selon l'axe longitudinal de la chaudière, sensiblement sur toute sa hauteur.

Un tel distributeur de boissons infusées peut être une machine à café qui peut confectionner un café du type espresso par envoi d'eau chaude sous pression, via un conduit d'eau, à travers la mouture de café contenue dans la chambre, puis en évacuant l'infusion obtenue à l'extérieur de l'appareil, où elle est recueillie dans une tasse. Un tel appareil comporte de plus des moyens pour produire de la vapeur, en faisant passer l'eau via un conduit de vapeur, et qui est utilisée ensuite pour confectionner un cappuccino, ou un thé ou pour réchauffer un liquide.

Par conduit d'eau on comprend un conduit apte à fournir de l'eau chaude d'infusion pour infuser le produit qui se trouve à l'intérieur de la chambre d'infusion lorsque l'eau poussée par des moyens de pompage traverse ce conduit à l'intérieur de la chaudière. Par conduit de vapeur on comprend un conduit indépendant du premier, mais connecté au même circuit hydraulique en amont, conduit qui est apte à recevoir de l'eau froide à l'entrée pour confectionner ensuite soit de la vapeur, soit de l'eau chaude, recueillies ensuite à l'extérieur de l'appareil, après passage de l'eau à travers ce conduit à l'intérieur de la chaudière, mais en évitant la chambre d'infusion.

Selon l'invention, les moyens pour produire la vapeur sont réalisés sous forme d'un conduit de vapeur hélicoïdal, ou formant une hélice, appartenant au corps de la chaudière en étant agencé selon l'axe longitudinal de cette dernière, sur toute sa hauteur. Par conduit formant une hélice on comprend un conduit ayant au moins deux boucles, chaque boucle se refermant à une hauteur différente par rapport à son point de départ. Ainsi, un même corps de chaudière renferme à la fois l'élément chauffant et deux autres conduits d'eau indépendants, appelés ici conduits d'eau et de vapeur où, pour plus de compacité, les deux conduits sont chauffés par un même élément chauffant. Le corps de la chaudière renferme alors une structure en triple hélice s'étendant selon son axe longitudinal, sensiblement sur toute sa hauteur, ce qui permet déjà d'obtenir une configuration de forme cylindrique allongée de la chaudière. De préférence, les hélices sont réalisées à pas constant sur leur hauteur, pour obtenir plus d'uniformité de répartition de la chaleur dans le volume de la chaudière.

Les trois hélices se trouvent à faible distance l'une de l'autre et sont de préférence reliées ensemble, au moins par des ponts de matière bonne conductrice de chaleur, tout en étant déployées en hauteur. Un élément chauffant en hélice s'étendant sur toute la hauteur de la chaudière assure déjà une bonne répartition de la température à l'intérieur du corps de la chaudière. Ainsi, une telle structure en triple hélice présente des propriétés de bon transfert thermique entre l'élément chauffant et les conduits d'eau et de vapeur, chacun de ces conduits étant disposé à distance constante prédéterminée par rapport à l'élément chauffant dans tout le volume de la chaudière, les hélices s'enroulant les unes autour des autres. Par ailleurs, une extraction de vapeur fournit d'un seul coup plus de calories à la chaudière, calories qui sont de ce fait mieux réparties dans le volume de cette dernière, sans créer de zones de points chauds. Une telle construction assure à la fois un bon rendement de la chaudière, une mise en température rapide et une température d'extraction de boisson ou de production de vapeur optimisées et constantes dans le temps lors du fonctionnement de la machine, sans tenir compte de son état préalable de fonctionnement.

Avantageusement, le diamètre de la fibre neutre du conduit de vapeur et le pas de son hélice sont sensiblement égaux à ceux de l'hélice de l'élément chauffant.

Un conduit de vapeur ainsi réalisé est parallèle en tout point de son trajet à l'élément chauffant et arrive à bien suivre les spires de ce dernier, pour un transfert thermique optimisé. Par ailleurs, le conduit d'eau ayant un diamètre différent de celui de l'élément chauffant, il est suffisamment écarté de l'élément chauffant afin qu'il puisse confectionner un café immédiatement après avoir envoyé de la vapeur à travers le conduit de vapeur, mais tout en étant chauffé de manière homogène à l'intérieur de la chaudière.

De préférence, la paroi externe du conduit de vapeur est adjacente à celle de l'élément chauffant électrique.

Par paroi externe du conduit de vapeur adjacente à celle de l'élément chauffant, on comprend que les deux parois peuvent être en contact ou disposées à une très faible distance, de l'ordre de quelques millimètres l'une de l'autre. Ainsi, pour que le conduit de vapeur puisse absorber toutes les calories fournies par l'élément chauffant, il doit être en contact thermique avec ce dernier. Ce contact thermique peut être fait directement ou moyennant un cordon de soudure ou un matériau moulé. Lors des essais effectués en laboratoire, une distance de 2 mm est préférable afin d'assurer à la fois un bon contact thermique et permettre à un matériau bon conducteur de chaleur de s'insérer entre les deux parois et les relieur.

Selon un mode avantageux de réalisation de l'invention, lesdits conduit d'eau et conduit de vapeur sont des tubes métalliques qui sont surmoulés ensemble avec l'élément chauffant, pour former le corps de la chaudière.

Cette solution permet de réaliser, de manière économique, deux conduits hélicoïdaux indépendants, déployés en hauteur, en des matériaux différents de celui du corps de la chaudière, tout en les rendant solidaires entre eux et avec l'élément chauffant, en tout point du volume du corps de la chaudière, par un matériau de remplissage ayant de bonnes propriétés de conduction thermique. Ainsi, les conduits d'eau ou de vapeur peuvent être réalisés en un matériau inerte à l'eau, par exemple de l'acier inoxydable, afin d'éviter des problèmes de toxicité dus au contact avec le corps de la chaudière, tout en utilisant un matériau facilement mis en forme par moulage pour cette dernière, par exemple un alliage d'aluminium.

Utilement, lesdits conduits d'eau et de vapeur comportent des tubulures d'extrémité qui sont rectilignes et ledit élément chauffant comporte des terminaisons qui sont rectilignes, les tubulures d'extrémité et terminaisons étant orientées selon la tangente au diamètre extérieur de leur hélice respective.

Ces parties d'extrémité sont les parties terminales des hélices des deux conduits et de l'élément chauffant qui sortent à l'extérieur du moule. Pour des contraintes technologiques de moulage, ces parties doivent être droites. Afin d'éviter les pertes de charge à l'intérieur de ces conduits et d'obtenir ainsi un bon écoulement des fluides à travers les conduits, et également pour des facilités d'enroulement de l'élément chauffant, on préfère réaliser les parties droites terminales desdits conduits et de l'élément chauffant dans le prolongement de la spire terminale de l'hélice, suivant une tangente à cette dernière.

Avantageusement, au moins une partie desdites tubulures d'extrémité desdits conduits et/ou au moins l'une desdites terminaisons sont parallèles à un premier plan médian du corps de la chaudière qui est perpendiculaire à un deuxième plan médian du corps de la chaudière qui est, lui, parallèle aux autres tubulures d'extrémité et/ou à l'autre ou aux autres terminaisons.

En effet, le surmoulage d'une structure en triple hélice, chaque hélice comportant deux parties terminales de connexion aux circuits hydraulique ou électrique de l'appareil, pose de nombreux problèmes de réalisation du moule et de son plan de joint de par l'orientation spatiale de toutes les terminaisons. Idéalement, les terminaisons auraient dû être parallèles entre elles et orientées selon un plan médian du corps de chaudière. Toutefois, en raison de leur agencement à l'intérieur de l'appareil et afin d'en optimiser l'encombrement, vu qu'elles doivent se connecter à des circuits différents, on préfère les agencer de manière décalée angulairement. Ainsi, après essais et réflexion, une telle solution à terminaisons et tubulures transversales permet d'utiliser certaines terminaisons ou extrémités pour réaliser le positionnement à l'intérieur du moule et de fermer le moule sur celles restantes. A titre d'exemple, les terminaisons de l'élément chauffant sont transversales aux tubulures d'extrémité des conduits d'eau et de vapeur.

De préférence, l'une des tubulures d'extrémité dudit conduit d'eau se prolonge par un coude qui débouche au fond d'une chambre d'infusion orientée selon l'axe longitudinal de ladite chaudière et avec laquelle elle forme une seule pièce.

Ainsi, la chambre d'infusion se trouve en contact avec la chaudière, la tubulure d'extrémité de sortie du conduit d'eau débouchant directement au fond de la chambre avant de sortir de la chaudière, pour un transfert thermique optimisé, sans pertes de chaleur, entre les deux pièces.

Avantageusement, ladite chambre d'infusion est surmoulée avec ledit corps de la chaudière.

On obtient ainsi un ensemble chaudière et chambre d'infusion compact procurant une bonne homogénéité des températures à l'intérieur de la chambre. De surcroît, cet ensemble peut être réalisé de manière économique par une seule opération de moulage.

De préférence, le rapport entre le diamètre extérieur du corps de la chambre d'infusion et celui du corps de ladite chaudière est compris entre 0,6 et 0,8.

La chambre d'infusion doit avoir un diamètre permettant d'obtenir des galettes de mouture plus larges que hautes, pour une perte de charge suffisante de l'eau d'infusion à travers la mouture lors de l'obtention du café. La chambre d'infusion est généralement chemisée par une cuve cylindrique en acier inoxydable d'épaisseur comprise entre 1,2 et 1,3 mm. La partie externe en aluminium moulée autour de la cuve doit alors avoir une épaisseur minimale, mais estimée de manière à ce qu'elle puisse résister à la pression d'injection lors du surmoulage et limiter les pertes de chaleur dans la zone de la chambre d'infusion, cette épaisseur étant de l'ordre de 2 à 3 mm. Le diamètre extérieur d'une chambre d'infusion ainsi obtenue est alors compris entre 40 et 50 mm. Par ailleurs, le corps de la chaudière doit avoir un diamètre minimum afin de pouvoir contenir tous ses composants et assurer un bon transfert thermique à l'intérieur de son volume. Après avoir réalisé et testé plusieurs prototypes, il s'est avéré que ces critères étaient bien remplis pour un rapport des diamètres externes de la chambre et du corps de la chaudière compris entre 0,6 et 0,8.

De manière avantageuse, ladite chambre d'infusion comprend un plateau-filtre et reçoit un piston presseur monté déplaçable selon l'axe longitudinal de la chaudière en étant actionné par un moyen d'entraînement et présentant un conduit de passage de l'infusion vers un orifice de sortie sous l'effet desdits moyens de pompage lorsque le piston ferme la chambre d'infusion, ledit plateau-filtre étant monté mobile dans ladite chambre d'infusion au moyen d'un mécanisme d'éjection comprenant une tige montée coulissante dans un alésage pratiqué dans le corps de ladite chaudière selon son axe longitudinal.

Ainsi, la chambre d'infusion reçoit le produit d'infusion, par exemple la mouture de café qui est tassée contre un plateau-filtre par un piston presseur qui coulisse à l'intérieur de la chambre, selon son axe longitudinal qui, dans un mode préféré de l'invention, est un axe vertical. L'eau chaude d'infusion arrive au fond de la chambre, passe à travers le filtre et la mouture, et l'infusion obtenue est évacuée à travers le piston presseur. La galette de marc de café qui en résulte est poussée à l'extérieur de la chambre d'infusion par une tige d'un mécanisme d'éjection qui passe à travers le corps de la chaudière qui doit ainsi avoir une épaisseur suffisante pour limiter les pertes de chaleur vers l'extérieur.

Cette circulation ascendante de l'infusion à travers le corps de la chaudière chauffé de manière homogène dans tout son volume à une température proche de 100°C, pour une consigne de l'élément chauffant fixée aux environs de 105°C à 120°C, permet alors une bonne extraction des essences de café aux environs de 92°C à 96°C et, après avoir traversé le piston presseur, d'obtenir un café dans la tasse à une température d'environ 72°C à 75°C, idéale pour une dégustation de café.

Par ailleurs, pour confectionner de la vapeur, la température de consigne de l'élément chauffant est d'environ 130°C à 140°C. Après le passage de la vapeur dans son conduit, à travers le corps de la chaudière, du fait d'une part, de l'agencement à distance du conduit d'eau et, d'autre part de la circulation ascendante continue de l'eau d'infusion, poussée par les moyens de pompage, qui évacue ainsi rapidement les éventuelles calories accumulées par le corps de la chaudière lors de la phase précédente, l'appareil peut alors confectionner un café immédiatement après avoir produit de la vapeur.

L'invention et ses avantages seront mieux compris à l'étude d'un mode de réalisation préféré pris à titre nullement limitatif et illustré dans les figures annexées dans lesquelles :
- la figure 1 est une vue en perspective d'un distributeur selon l'invention, certains de ses composants étant omis pour plus de clarté;
- la figure 2a est une vue latérale d'une chaudière du distributeur de la figure 1;
- la figure 2b est une vue en coupe axiale réalisée avec le plan A-A de la figure 2a;
- la figure 3a est une vue latérale d'un sous-ensemble de la chaudière de la figure 2a;
- la figure 3b est une vue de dessus du sous-ensemble de la figure 3a.

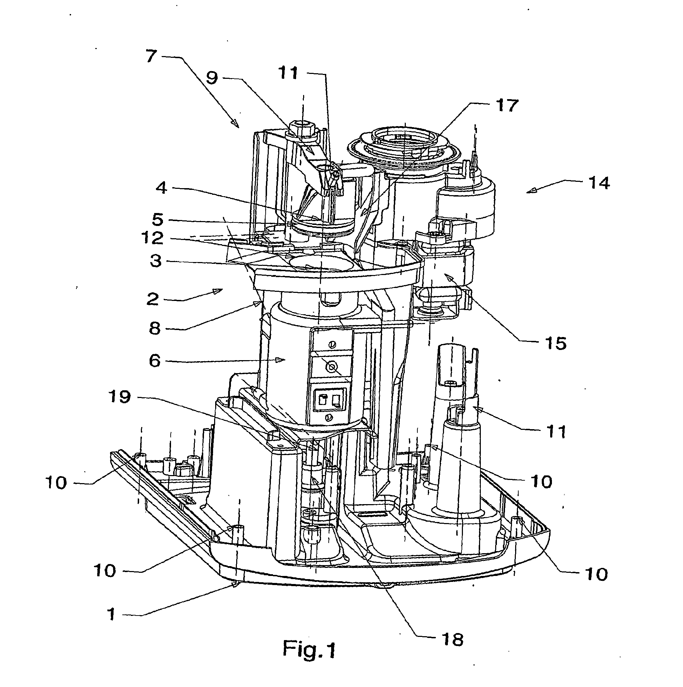

Le distributeur automatique que l'on a représenté à la figure 1 est une machine à café automatique apte à réaliser un café espresso et elle comprend un boîtier (en partie enlevé sur la figure) dont le socle 1 est visible et forme support pour les composants de l'appareil qui seront décrits par la suite. La partie supérieure du boîtier vient se fixer sur le socle 1 par des vis montées dans des orifices 10 prévus à cet effet sur le pourtour du socle 1. On remarque sur la figure 1 un groupe d'infusion 2 comportant une chambre d'infusion 3 comportant une cuve 12 apte à recevoir une certaine quantité de café moulu au-dessus d'une paroi inférieure formant un plateau-filtre pour la mouture. Dans cet exemple, la chambre d'infusion 3 est montée fixe au-dessus d'une chaudière 6, d'axe vertical V, dont elle constitue le prolongement. La chaudière 6 comporte un élément chauffant et assure l'alimentation en eau chaude de la chambre d'infusion 3, tel qu'il sera expliqué par la suite. En l'occurrence, la chaudière pourrait être dissociée de la chambre d'infusion ou pourrait être agencée horizontalement.

L'appareil comprend par ailleurs un distributeur de café moulu qui est, dans l'exemple représenté à la figure 1, un broyeur 14 de grains de café. Le broyeur ou moulin à café comprend généralement un réservoir de grains de café en partie supérieure et, en partie inférieure, un arbre entraîné en rotation par un moteur électrique 15 pour actionner une meule tournante opposée à une meule fixe, le café en grains étant introduit entre ces meules pour sortir à l'état moulu par un orifice de distribution à travers lequel il passe dans une goulotte 17. La goulotte 17 a une forme générale de tremplin incliné par rapport à la verticale et elle est orientée en direction de la chambre d'infusion 3 qu'elle alimente en mouture en provenance du broyeur 14.

La chambre d'infusion 3 reçoit également un piston presseur 4 qui coulisse selon un même axe vertical pour compacter la mouture de café à l'intérieur de la chambre d'infusion 3. Le piston presseur 4 comporte un joint torique 5 permettant l'étanchéité avec la chambre d'infusion 3 pendant la fabrication du café. L'appareil comprend également des moyens d'actionnement 7 du piston presseur 4 qui sont constitués, dans l'exemple représenté, par un vérin hydraulique 8 comportant un piston interne qui est relié au piston presseur 4 par l'intermédiaire d'une barre 9 rigide. Le vérin hydraulique 8 reçoit un liquide sous pression en provenance du circuit hydraulique de l'appareil, liquide qui déplace le piston du vérin vers le bas en même temps que le piston presseur 4 qui passe alors d'une position de repos (en partie supérieure de l'appareil) à une position de travail, en descendant verticalement en direction de la chambre d'infusion 3 pour comprimer la mouture. L'eau chaude est alors envoyée à travers la mouture et la boisson infusée est ensuite évacuée au travers du piston presseur 4 dans lequel est réalisé un conduit prolongé vers l'extérieur par un canal d'évacuation 11 qui oriente la boisson obtenue vers une tasse à l'extérieur de la machine. Le vérin hydraulique ici décrit est un vérin à simple effet, le rappel en position de repos du piston du vérin étant réalisé par un ressort situé en partie inférieure du vérin hydraulique. Un tel vérin et actionnement du piston presseur sont mieux décrits dans le document WO 99/12457.

Par ailleurs, la machine ici décrite est équipée d'une buse (non représentée) de sortie d'eau chaude ou de vapeur qui peut être utilisée avec un accessoire pour cappuccino monté à son extrémité. L'eau chaude ou la vapeur sortant par cette buse sont produites à l'intérieur de la chaudière 6, dans un conduit indépendant, tout en utilisant, de manière avantageuse, un même élément chauffant électrique que celui que l'on utilise pour produire de l'eau chaude d'infusion, mais régulé selon une température de consigne différente, tel qu'il sera expliqué plus loin.

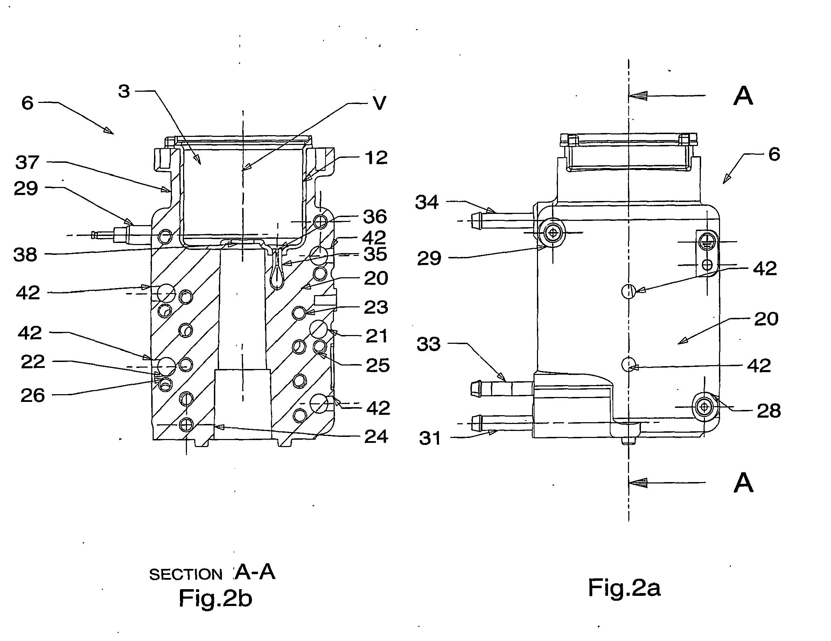

Selon l'invention et tel que mieux visible à la figure 2b, la chaudière 6 se présente sous forme d'un bloc chauffant dont le corps 20 intègre une structure en triple hélice composée de trois pièces tubulaires enroulées en hélice autour et le long de l'axe longitudinal V de la chaudière 6, notamment : un élément chauffant 21 électrique, un conduit d'eau 23, ainsi qu'un conduit de vapeur 25. Le corps 20 est réalisé en un alliage d'aluminium par injection dans un moule, tel qu'il sera expliqué par la suite. Le corps 20 présente un diamètre compris entre 60 et 70 mm et a une hauteur (chambre d'infusion comprise) d'environ 90 à 100 mm. Un alésage central 24 le traverse jusqu'au fond de la chambre d'infusion 3 pour laisser passer la tige 19 du mécanisme d'éjection 18. Dans cet exemple, la chambre d'infusion 3 fait corps commun avec celui de la chaudière 6. Le corps 37 de la chambre d'infusion est obtenu par surmoulage de la cuve 12 avec la structure en triple hélice de la chaudière.

L'élément chauffant 21 est une résistance électrique blindée ayant une puissance comprise entre 1200 et 1500 W. Ses connexions au circuit électrique de l'appareil se font moyennant des fiches qui sortent à l'extrémité de chacune de ses terminaisons 28,29 (fig.2a). Les terminaisons 28,29 sont rectilignes et saillantes par rapport au corps 20 de la chaudière et se trouvent l'une en partie inférieure et l'autre en partie supérieure du corps 20 de la chaudière 6. L'élément chauffant 21 se trouve disposé vers la périphérie du corps 20, sa longueur comprise entre 400 et 600 mm, les paramètres de son hélice ont été estimés de manière à ce qu'il puisse assurer une bonne répartition de la température à l'intérieur du corps 20. A titre d'exemple, on choisit un diamètre extérieur de 56 mm et un pas de 26 mm pour l'hélice de l'élément chauffant 21.

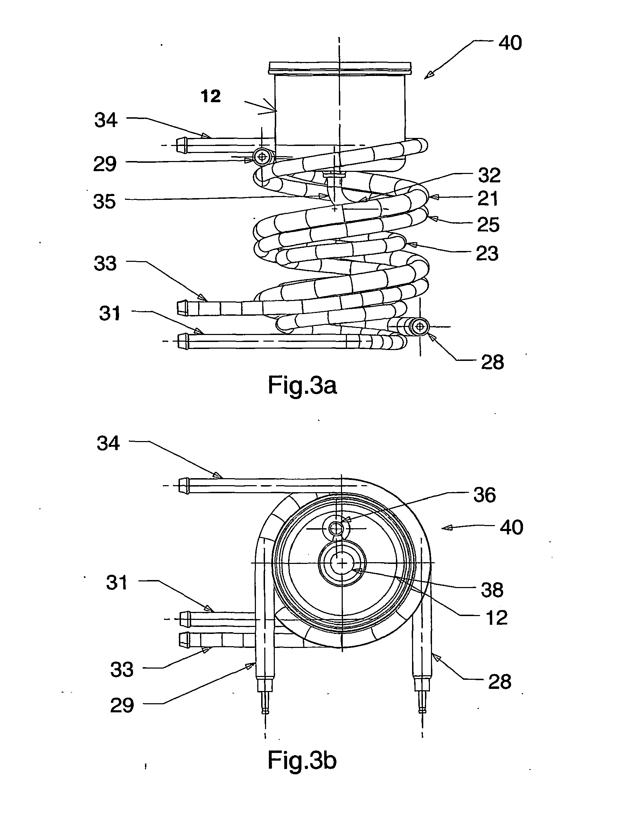

Le conduit d'eau 23 est un tube en acier inoxydable de longueur suffisante pour qu'il puisse réchauffer à la bonne température l'eau le traversant, sans tenir compte de ses conditions initiales de fonctionnement. A titre d'exemple, sa longueur peut être comprise entre 500 et 700 mm. Ce tube est disposé à distance de l'élément chauffant 21, son hélice présentant, à titre d'exemple, un diamètre extérieur de 40 mm et un pas de 12 mm. Le conduit d'eau 23 comporte une tubulure d'extrémité 31 d'entrée d'eau qui est rectiligne et est située en partie inférieure du corps 20, saillante par rapport à ce dernier. Son extrémité de sortie d'eau présente une partie rectiligne 32 (fig.3a) puis un coude 35 qui débouche par un orifice 36 au fond de la chambre d'infusion 3.

Le conduit de vapeur 25 est un tube en acier inoxydable de longueur suffisante pour qu'il puisse transformer en vapeur l'eau le traversant. A cet effet, le conduit de vapeur 25, d'une longueur comprise entre 450 et 650 mm, doit être situé au plus près de l'élément chauffant 21, et doit avoir des caractéristiques (pas, diamètre) de son hélice très proches ou égales à celles de ce dernier afin qu'il puisse récupérer au maximum la chaleur fournie par l'élément chauffant 21. Dans l'exemple représenté qui utilise une technique de surmoulage pour réaliser l'ensemble formant chaudière 6, la paroi externe 26 du conduit de vapeur 25 et la paroi externe 22 de l'élément chauffant sont situées à une distance d'environ 2mm afin d'éviter la formation de bulles d'air isolantes entre les deux à l'intérieur du corps 20 lors de l'injection du matériau dans le moule. Le conduit de vapeur 25 comporte, en partie inférieure du corps 20, une tubulure d'extrémité 33 d'entrée d'eau pour la production de vapeur et, en partie supérieure du corps 20, une tubulure d'extrémité 34 de sortie de vapeur, les deux tubulures étant rectilignes et saillantes par rapport au corps 20 de la chaudière 6.

Les figures 3a et 3b illustrent un sous-ensemble 40 comprenant la cuve 12, et la structure en triple spirale composée de l'élément chauffant 21, du conduit d'eau 23 et du conduit de vapeur 25 rendus solidaires avant le surmoulage. Chaque spirale ou hélice comporte, de préférence, au moins deux boucles fermées chacune à une hauteur différente de celle du départ. Avant de les rendre solidaires, ces composants sont positionnés l'un par rapport à l'autre sur un gabarit d'assemblage non représenté dans les figures.

Ainsi, on observe dans cet agencement que les deux tubulures d'extrémité 31,33 d'entrée d'eau pour l'infusion et d'eau pour la vapeur sont parallèles et sont situées en partie inférieure du sous-ensemble 40, alors que la tubulure d'extrémité 34 de sortie de vapeur est située en partie supérieure du sous-ensemble 40, en étant parallèle aux tubulures d'entrée. La tubulure de sortie d'eau chaude présente une tubulure d'extrémité 32 rectiligne qui se prolonge vers le haut par un coude 35 qui débouche par un orifice 36 dans la cuve 12 de la chambre d'infusion. Le coude 35 est fixé au fond de la cuve, par soudure, brasage, collage, etc. Tel que visible à la figure 3b, l'orifice 36 est disposé de manière excentrée dans le fond de la cuve 12 qui comporte au centre une ouverture 38 de passage de la tige 19 du mécanisme d'éjection du plateau-filtre supportant la mouture de café. Un tel mécanisme d'éjection est mieux décrit dans le document WO 99/12455.

L'élément chauffant 21 est disposé sur le gabarit de manière à ce que ses terminaisons 28, 29 soient perpendiculaires aux tubulures d'extrémité 31,32,33,34 des conduits d'eau et de vapeur, la terminaison 28 étant agencée en la partie inférieure du sous-ensemble 40.

Lorsque tous les composants du sous-ensemble 40 ont été positionnés sur le gabarit d'assemblage, ils sont rendus solidaires entre eux par des moyens de fixation, par exemple par soudure ou par collage (par exemple en utilisant une colle polyuréthane) des lamelles métalliques le long des tubes.

Après assemblage et fixation, le gabarit est enlevé et le sous-ensemble 40 est positionné à l'intérieur d'un moule. Le sous-ensemble 40 est introduit à l'intérieur d'un moule en le positionnant par rapport à l'élément chauffant 21, notamment en introduisant les terminaisons 28, 29 de ce dernier dans des orifices prévus à cet effet dans la paroi du moule et en utilisant des tiges de centrage qui prennent appui sur les spires de l'élément chauffant 21. Les ouvertures 42 (fig. 2b) résultant après surmoulage témoignent de la présence de ces tiges de centrage.

Une fois le sous-ensemble 40 mis en place, le moule est fermé selon un plan de joint qui suit, au centre, un premier plan médian du sous-ensemble 40 qui est perpendiculaire à un deuxième plan médian parallèle aux terminaisons 28,29 de l'élément chauffant 21. Le trajet du plan de joint passe, en partie inférieure, par des plans contenant l'axe des tubulures d'extrémité 31,33 et, en partie supérieure, par un autre plan contenant l'axe de la tubulure 34. L'injection d'un alliage d'aluminium a lieu ensuite à l'intérieur du moule. L'alliage injecté doit avoir de bonnes propriétés d'adhérence à l'inox et de fluidité afin de bien remplir l'espace du moule, sans enfermer des bulles d'air isolantes, surtout au contact de la structure du sous-ensemble. Un tel alliage est par exemple AS9U3 ou ADC10 qui est un alliage d'aluminium non-alimentaire, mais d'une très bonne fluidité.

La chaudière ainsi obtenue est celle représentée aux figures 2a et 2b et elle est montée dans son support à l'intérieur de la machine, les tubulures d'extrémité des conduits d'eau et de vapeur sont raccordées au circuit hydraulique de la machine et l'élément chauffant est raccordé au circuit électrique.

En fonctionnement, lorsque l'on veut confectionner du café, l'élément chauffant 21 est régulé, à l'aide d'un thermostat fixé sur la chaudière 6, à une température de consigne de 105°C à 120°C. L'eau froide poussée par une pompe de 15 bars montée en amont de la chaudière arrive, via une vanne multivoies, à la tubulure d'extrémité 31 d'entrée et elle se réchauffe en parcourant, en sens ascendant, le conduit d'eau 23 sur toute sa longueur jusqu'à la sortie via l'orifice 36 à l'intérieur de la chambre d'infusion 3. Le conduit d'eau 23 est lui même chauffé par la masse d'aluminium du corps 20, sa longueur et son diamètre étant estimés de manière à ce que l'eau qui le parcourt arrive en sortie à une température proche de 100°C pour permettre une bonne infusion du café lorsqu'elle traverse la mouture de café à l'intérieur de la chambre d'infusion 3. L'infusion obtenue s'écoule à l'extérieur de la machine, dans une tasse, par un canal d'évacuation prévu dans le piston presseur, tel que mieux décrit dans le document WO 99/12456.

Par ailleurs, lorsque l'on veut confectionner de l'eau chaude pour préparer un thé, par exemple, l'élément chauffant 21 est régulé à une température d'environ 100°C à 115°C et l'eau chaude est envoyée à l'intérieur du conduit de vapeur 25 et se réchauffe en le parcourant, sur toute sa longueur avant de sortir à l'extérieur par une buse de sortie prévue à cet effet. La température d'eau à la sortie est d'environ 88°C à 98°C. La longueur et le diamètre de ce conduit et son agencement proche de l'élément chauffant 21 ont été choisis de manière à ce que l'on obtienne, de manière économique, de très bonnes performances thermiques.

Pour une production de vapeur, l'élément chauffant 21 est régulé à une température supérieure, comprise entre 130°C et 140°C. Le débit d'eau envoyé par la pompe en aval du conduit de vapeur 25 est plus faible que précédemment, et il est commandé automatiquement par la carte électronique de l'appareil. La vapeur obtenue est envoyée à l'extérieur par une buse de sortie et peut être utilisée pour réchauffer du lait, pour produire du cappuccino, etc.

D'autres variantes et modes de réalisation peuvent être envisagés sans sortir du cadre de ces revendications.

Ainsi, on pourrait envisager une chaudière dont le corps renferme de manière étanche une structure en triple spirale selon l'invention et où l'espace intérieur du corps est rempli d'un fluide calorifuge, par exemple une huile.

## Revendications

1. Distributeur de boissons infusées comportant un boîtier renfermant des moyens de pompage d'eau à partir d'un réservoir pour l'envoyer à travers une chaudière (6) dans une chambre d'infusion (3) contenant un produit à infuser, puis l'évacuer sous forme d'infusion à l'extérieur de la chambre, ladite chaudière (6) comportant un corps (20) cylindrique intégrant un élément chauffant (21) électrique et un conduit d'eau (23), l'élément chauffant (21) et ledit conduit d'eau (23) formant deux hélices de diamètres différents enroulées autour de l'axe longitudinal (V) du corps de la chaudière, sensiblement sur toute sa hauteur, **caractérisé en ce que** ledit corps (20) de chaudière intègre un conduit de vapeur (25) formant une hélice ayant au moins deux boucles, agencée selon l'axe longitudinal (V) de la chaudière (6), sensiblement sur toute sa hauteur.

2. Distributeur de boissons selon la revendication 1, **caractérisé en ce que** le diamètre de la fibre neutre du conduit de vapeur (25) et le pas de son hélice sont sensiblement égaux à ceux de l'hélice de l'élément chauffant (21).

3. Distributeur de boissons selon l'une des revendications 1 ou 2, **caractérisé en ce que** la paroi externe (26) du conduit de vapeur (25) est adjacente à celle (22) de l'élément chauffant électrique (21).

4. Distributeur de boissons selon la revendication 3, **caractérisé en ce que** lesdits conduit d'eau (23) et conduit de vapeur (25) sont des tubes métalliques qui sont surmoulés, ensemble avec l'élément chauffant (21), pour former le corps (20) de la chaudière (6).

5. Distributeur de boissons selon l'une des revendications précédentes, **caractérisé en ce que** lesdits conduit d'eau (23) et conduit de vapeur (25) comportent des tubulures d'extrémité (31,32,33,34) qui sont rectilignes et que ledit élément chauffant (21) comporte des terminaisons (28,29) qui sont rectilignes, les tubulures d'extrémité (31,32,33,34) et terminaisons (28,29) étant orientées selon la tangente au diamètre extérieur de leur hélice respective.

6. Distributeur de boissons selon la revendication 5, **caractérisé en ce que** au moins une partie desdites tubulures d'extrémité (31,32,33,34) desdits conduits et/ou au moins l'une desdites terminaisons (28,29) sont parallèles à un premier plan médian du corps (20) de la chaudière (6) qui est perpendiculaire à un deuxième plan médian du corps (20) de la chaudière (6) qui est, lui, parallèle aux autres tubulures d'extrémité (31,32,33,34) et/ou à l'autre ou aux autres terminaisons (28,29).

7. Distributeur de boissons selon l'une des revendications 5 ou 6, **caractérisé en ce que** l'une des tubulures d'extrémité (32) dudit conduit d'eau se prolonge
par un coude (35) qui débouche au fond d'une chambre d'infusion (3) orientée selon l'axe longitudinal de ladite chaudière (6) et avec laquelle elle forme une seule pièce.

8. Distributeur de boissons selon l'une des revendications 4 à 7, **caractérisé en ce que** ladite chambre d'infusion (3) est surmoulée avec ledit corps (20) de la chaudière (6).

9. Distributeur de boissons selon la revendication 8, **caractérisé en ce que** le rapport entre le diamètre extérieur du corps (37) de la chambre d'infusion (3) et celui du corps (20) de ladite chaudière (6) est compris entre 0,6 et 0,8.

10. Distributeur de boissons selon l'une des revendications précédentes, **caractérisé en ce que** ladite chambre d'infusion (3) comprend un plateau-filtre et reçoit un piston presseur (4) monté déplaçable selon l'axe longitudinal de la chaudière en étant actionné par un moyen d'entraînement (7) et présentant un conduit de passage de l'infusion vers un orifice de sortie sous l'effet desdits moyens de pompage lorsque le piston (4) ferme la chambre d'infusion (3), ledit plateau-filtre étant monté mobile dans ladite chambre d'infusion au moyen d'un mécanisme d'éjection (18) comprenant une tige (19) montée coulissante dans un alésage (24) pratiqué dans le corps (20) de ladite chaudière (6) selon son axe longitudinal.

## Claims

1. A brewing beverage dispenser provided with a housing comprising means for pumping water from a container, transferring said water through a boiler (6) to a brewing chamber (3) containing brewable product and for removing the brewed product from the brewing chamber. Said boiler (6) comprises a cylindrical body (20) containing an electric heating element (21) and a water conduit (23), wherein said heating element and water conduit (23) form two helixes having different diameters and rotatable about the longitudinal axis (V) of the boiler body substantially through the entire height thereof, **characterised in that** said boiler body (20) comprises a steam conduit (25) which forms a helix with at least two loops, mounted along the longitudinal axis (V) of the boiler (6) substantially through the entire height thereof.

2. A brewing beverage dispenser according to claim 1, **characterised in that** the diameter of the neutral axis of the steam conduit (25) and the pitch of its helix are substantially equal to those of the helix of the heating element (21).

3. A brewing beverage dispenser according to one of claims 1 or 2, **characterised in that** the outer wall (26) of the steam conduit (25) is adjacent to that (22) of the electric heating element (21).

4. A brewing beverage dispenser according to claim 3, **characterised in that** said water conduit (23) and steam conduit (25) are metal tubes which are overmoulded together with the heating element (21), to form the body (20) of the boiler (6).

5. A brewing beverage dispenser according to one of the preceding claims, **characterised in that** said water conduit (23) and steam conduit (25) contain end tubes (31, 32, 33, 34) which are rectilinear and that said heating element (21) comprises terminations (28, 29) which are rectilinear, the end tubes (31, 32, 33, 34) and terminations (28, 29) being aligned along the tangent to the outer diameter of their respective helix.

6. A brewing beverage dispenser according to claim 5, **characterised in that** at least one portion of said end tubes (31, 32, 33, 34) of said conduits and/or at least one of said terminations (28, 29) are parallel to a first median plane of the body (20) of the boiler (6) which is perpendicular to a second median plane of the body (20) of the boiler (6) which is parallel to the other end tubes (31, 32, 33, 34) and/or to the other termination(s) (28, 29).

7. A brewing beverage dispenser according to one of claims 5 or 6, **characterised in that** one of the end tubes (32) of said water conduit is extended by a bend (35) which opens at the bottom of a brewing chamber (3) aligned along the longitudinal axis of said boiler (6) and with which it forms a single part.

8. A brewing beverage dispenser according to one of claims 4 to 7, **characterised in that** said brewing chamber (3) is overmoulded with said body (20) of the boiler (6).

9. A brewing beverage dispenser according to claim 8, **characterised in that** the ratio between the outer diameter of the body (37) of the brewing chamber (3) and that of the body (20) of said boiler (6) is between 0.6 and 0.8.

10. A brewing beverage dispenser according to one of the preceding claims, **characterised in that** said brewing chamber (3) comprises a filter plate and receives a pressure piston (4) displaceably mounted along the longitudinal axis of the boiler by being actuated by driving means (7) and having a conduit for the brewed product to flow towards an outlet orifice under the effect of said pumping means when the piston (4) closes the brewing chamber (3). Said filter plate is movably mounted in said brewing chamber by means of an ejection mechanism (18) comprising a rod (19) slidably mounted inside a bore (24) made in the body (20) of said boiler (6) along the longitudinal axis thereof.

## Patentansprüche

1. Ausgabeautomat für aufgebrühte Getränke, umfassend ein Gehäuse, das Mittel zum Pumpen von Wasser ausgehend von einem Behälter beinhaltet, um es durch einen Erhitzer (6) in eine Aufbrühkammer (3) zu leiten, die das aufzubrühende Produkt enthält, und um es dann in Form eines Aufbrühgetränks aus der Kammer abzuleiten, wobei der Erhitzer (6) einen zylindrischen Körper (20) umfasst, in dem sich ein elektrisches Heizelement (21) und eine Wasserleitung (23) befinden, wobei das Heizelement (21) und die Wasserleitung (23) zwei Spiralen mit unterschiedlichen Durchmessern bilden, die sich um die Längsachse (V) des Körpers des Erhitzers, im Wesentlichen über seine gesamte Höhe, drehen, **dadurch gekennzeichnet, dass** sich im Körper (20) des Erhitzers eine Dampfleitung (25) befindet, die eine Spirale mit mindestens zwei Windungen bildet, die gemäß der Längsachse (V) des Erhitzers (6), im Wesentlichen über seine gesamte Höhe, angeordnet ist.

2. Getränkeausgabeautomat nach Anspruch 1, **dadurch gekennzeichnet, dass** der Durchmesser der neutralen Faser der Dampfleitung (25) und die Steigung ihrer Spirale im Wesentlichen gleich sind wie jene der Spirale des Heizelements (21).

3. Getränkeausgabeautomat nach einem der Ansprüche 1 oder 2, **dadurch gekennzeichnet, dass** die Außenwand (26) der Dampfleitung (25) an jene (22) des elektrischen Heizelements (21) angrenzt.

4. Getränkeausgabeautomat nach Anspruch 3, **dadurch gekennzeichnet, dass** die Wasserleitung (23) und die Dampfleitung (25) Metallrohre sind, die zusammen mit dem Heizelement (21) umformt sind, um den Körper (20) des Erhitzers (6) zu bilden.

5. Getränkeausgabeautomat nach einem der vorhergehenden Ansprüche, **dadurch gekennzeichnet, dass** die Wasserleitung (23) und die Dampfleitung (25) Endstutzen (31, 32, 33, 34) umfassen, die geradlinig sind, und **dadurch**, dass das Heizelement (21) Abschlüsse (28, 29) umfasst, die geradlinig sind, wobei die Endstutzen (31, 32, 33, 34) und die Abschlüsse (28, 29) gemäß der Tangente zum Außendurchmesser ihrer jeweiligen Spirale ausgerichtet sind.

6. Getränkeausgabeautomat nach Anspruch 5, **dadurch gekennzeichnet, dass** mindestens ein Teil der Endstutzen (31, 32, 33, 34) der Leitungen und/oder mindestens einer der Abschlüsse (28, 29) parallel zu einer ersten medianen Ebene des Körpers (20) des Erhitzers (6) verlaufen, die senkrecht zu einer zweiten medianen Ebene des Körpers (20) des Erhitzers (6) verläuft, die wiederum parallel zu den anderen Endstutzen (31, 32, 33, 34) und/oder zum anderen oder zu den anderen Abschlüssen (28, 29) verläuft.

7. Getränkeausgabeautomat nach einem der Ansprüche 5 oder 6, **dadurch gekennzeichnet, dass** einer der Endstutzen (32) der Wasserleitung von einem Kniestück (35) verlängert wird, das in den Boden einer Aufbrühkammer (3) mündet, die gemäß der Längsachse des Erhitzers (6) ausgerichtet ist und mit dem sie ein einziges Teil bildet.

8. Getränkeausgabeautomat nach einem der Ansprüche 4 bis 7, **dadurch gekennzeichnet, dass** die Aufbrühkammer (3) vom Körper (20) des Erhitzers (6) umformt wird.

9. Getränkeausgabeautomat nach Anspruch 8, **dadurch gekennzeichnet, dass** das Verhältnis zwischen dem Außendurchmesser des Körpers (37) der Aufbrühkammer (3) und jenem des Körpers (20) des Erhitzers (6) zwischen 0,6 und 0,8 beträgt.

10. Getränkeausgabeautomat nach einem der vorhergehenden Ansprüche, **dadurch gekennzeichnet, dass** die Aufbrühkammer (3) eine Filterplatte umfasst und einem Presskolben (4) aufnimmt, der verschiebbar gemäß der Längsachse des Erhitzers befestigt ist, wobei er von einem Antriebsmittel (7) betätigt wird und eine Leitung für den Durchlauf des Aufbrühgetränks hin zu einer Auslauföffnung unter Einwirkung der Pumpmittel aufweist, sobald der Kolben (4) die Aufbrühkammer (3) schließt, wobei die Filterplatte in der Aufbrühkammer mittels eines Auswurfmechanismus (18) beweglich befestigt ist, der einen Stift (19) umfasst, der gleitend durch eine Bohrung (24), die im Körper (20) des Erhitzers (6) gemäß seiner Längsachse ausgeführt ist, befestigt ist.
